(19) Europäisches Patentamt
European Patent Office
Office européen des brevets

(11) Veröffentlichungsnummer: **0 027 907**
**B1**

# (12) EUROPÄISCHE PATENTSCHRIFT

(45) Veröffentlichungstag der Patentschrift: **16.03.83**

(51) Int. Cl.³: **C 09 D 17/00**

(21) Anmeldenummer: **80105877.7**

(22) Anmeldetag: **27.09.80**

## (54) Pigmentpräparationen, ihre Verwendung und ein Verfahren zur Verbesserung von Pigmentpräparationen.

(30) Priorität: **11.10.79 DE 2941195**

(43) Veröffentlichungstag der Anmeldung: **06.05.81 Patentblatt 81/18**

(45) Bekanntmachung des Hinweises auf die Patenterteilung: **16.03.83 Patentblatt 83/11**

(84) Benannte Vertragsstaaten: **CH DE FR GB IT LI**

(56) Entgegenhaltungen:
**DE-A-2 402 839**
**GB-A-1 457 094**
**US-A-4 075 152**

(73) Patentinhaber: **BAYER AG, Zentralbereich Patente, Marken und Lizenzen, D-5090 Leverkusen 1, Bayerwerk (DE)**

(72) Erfinder: **Giesecke, Henning, Dr., Kalk-Mülheimer-Strasse 400, D-5000 Köln 80 (DE)**
Erfinder: **Schäfer, Walter, Dr., Wolfskaul 6, D-5000 Köln 80 (DE)**
Erfinder: **Pape, Georg, Dr., Imbach 43, D-5090 Leverkusen 31 (DE)**
Erfinder: **Kressner, Michael, Ing. grad., Förstchen 33 a, D-5653 Leichlingen (DE)**
Erfinder: **Wolf, Karlheinz, Dr., Paul-Klee-Strasse 77, D-5090 Leverkusen 1 (DE)**
Erfinder: **Bremer, Fritz, Dr., Paul-Klee-Strasse 64, D-5090 Leverkusen 1 (DE)**

**EP 0 027 907 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Pigmentpräparationen, ihre Verwendung und ein Verfahren zur Verbesserung von Pigmentpräparationen

Die Erfindung betrifft Pigmentpräparationen, die ein isoharnstoffgruppenhaltiges Urethanharz enthalten, sowie ihre Verwendung zum Pigmentieren von organischem makromolekularem Material.

Polyurethane als Lackbindemittel oder Beschichtungsmaterial, z.B. für Textilien, werden in einer breiten Palette als Ein- oder Zweikomponenten-Systeme, hochelastisch oder hart, lösungsmittelfrei oder lösungsmittelhaltig hergestellt. Sofern diese Materialien pigmentiert werden, stellt sich das Problem, einen geeigneten Pigmentträger zu finden, in dem die Pigmente hochkonzentriert flockungsfrei dispergiert werden können und der mit den verschiedenartigen Polyurethanen verträglich ist, um nicht für jedes spezielle System eine spezielle Pigmentpaste bereithalten zu müssen. Bei den in der Lackindustrie gebräuchlichen Zweikomponenten-Systemen steht für die Pigmentierung zumeist nur die relativ niedrigviskose Polyolkomponente zur Verfügung, in der nicht nur Russ oder organische Pigmente wie Phthalocyanine, sondern auch anorganische Pigmente wie Eisenoxidgelb oder Eisenoxidrot nicht ohne Flockungs- und Thixotropieerscheinungen zu dispergieren sind. Das macht zunächst jede Anreibung problematisch und unwirtschaftlich, wirkt sich aber nach Zusatz der Isocyanat-Komponente noch negativ auf Verlauf, Glanz, Farbtiefe, Deckfähigkeit und Glanzhaltung der ausgehärteten Lackfilme aus.

In den Polyurethan-Beschichtungsmaterialien für Textilien liegen sehr hochmolekulare Körper vor, die untereinander nur begrenzt mischbar sind (Ein- oder Zweikomponenten-Systeme) und schon allein aus Viskositätsgründen keine hohen Pigmentkonzentrationen erlauben.

Neben diesen homogenen Polyurethanen haben zellförmige Polyurethane grosse Bedeutung erlangt, die hinsichtlich ihrer Elastizität von harten zu extrem weichen Schaumstoffen abgewandelt werden können. Die Anfärbung dieser Schaumstoffe geschieht in der Hauptsache kurz vor der Verschäumung in einem Mischkopf, in dem Polyole und Polyisocyanate in Gegenwart von Hilfsstoffen mit Farbpasten innig vermischt werden. Als Bindemittel enthalten solche Farbpasten zumeist Polyester- oder Polyether-Polyole, deren Pigmentaufnahmevermögen insbesondere gegenüber Russ so niedrig ist, dass bei Russkonzentrationen von 10–18% bereits stockige Farbpasten vorliegen. Bei einer normalen Zudosierung der Farbpasten von 3 bis 5%, die noch ohne grossen Einfluss auf das mechanische Verhalten der Schaumstoffe ist, wird keine tiefe Anfärbung erreicht, sondern z.B. im Falle des Russes nur eine graue Färbung.

Es wurde nun gefunden, dass die aufgezeigten Schwierigkeiten überwunden werden können, wenn als Pigmentträger isoharnstoffgruppenhaltige Urethanharze eingesetzt werden.

Die Erfindung betrifft demnach Pigmentpräparationen, die isoharnstoffgruppenhaltige Urethanharze enthalten.

Die vorzugsweise eingesetzten Urethanharze besitzen einen Isoharnstoffgruppengehalt von 0,1–20 Gew.-% und weisen als 40 gew.%ige Lösung in Dibutylphthalat eine Viskosität von 0,0005–5 Pa·s bei 25 °C auf. Die Messung der Viskosität erfolgt beispielsweise im Kugelfallviskosimeter nach Höppler [s. Z. tech. Phys. 14, 165 (1933)].

Die erfindungsgemässen Pigmentpräparationen enthalten vorzugsweise 3 bis 80 Gew.-% Pigment, 0,5–50 Gew.-% isoharnstoffgruppenhaltiges Urethanharz und 0–90 Gew.-% organisches Verdünnungsmittel; besonders bevorzugt enthalten sie 10–70 Gew.-% Pigment, insbesondere 10–50 Gew.-% organisches Pigment oder Russ oder 15–80 Gew.-% anorganisches Pigment, 0,5–30 Gew.-% isoharnstoffgruppenhaltiges Urethanharz, insbesondere 1–20 Gew.-%, sowie 10–90 Gew.-% organisches Verdünnungsmittel.

Die Erfindung betrifft weiterhin ein Verfahren zur Verbesserung des Pigmentbindevermögens von üblichen in Pigmentpräparationen eingesetzten Polyestern, Polyethern und Polyurethanen, das dadurch gekennzeichnet ist, dass man den Präparationen ein isoharnstoffgruppenhaltiges Urethan zusetzt.

Die Pigmente, die in den lösungsmittelfreien oder -haltigen Pigmentzubereitungen enthalten sind, unterliegen keiner Beschränkung. Sie können organischer oder anorganischer Natur sein. Geeignete organische Pigmente sind z.B. solche der Azo-, Anthrachinon-, Azaporphin-, Thioindigo-Reihe, ferner andere polycyclische Pigmente, z.B. aus der Chinacridon-, Dioxazin-, Naphthalintetracarbonsäure-, Perylentetracarbonsäure- oder Isoindolinon-Reihe sowie Metallkomplex-Pigmente oder verlackte Farbstoffe wie Ca-, Mg-, Al-Lacke von sulfonsäure- und/oder carbonsäuregruppenhaltigen Farbstoffen, von denen eine grosse Zahl beispielsweise aus Colour-Index, 2. Auflage, bekannt ist. Geeignete anorganische Pigmente sind beispielsweise Zinksulfide, Cadmiumsulfide-, selenide, Ultramarin, Titandioxide, Eisenoxide, Nikkel- oder Chromantimontitanoxide, Kobaltblau, Chromoxide und Chromatpigmente. Vorzugsweise wird Russ eingesetzt.

Das erfindungsgemäss verwendete Urethanharz kann ausser Isoharnstoff- und Urethangruppen auch weitere in Urethanharzen vorkommende Gruppen wie Ester- und/oder Ethergruppen enthalten.

Die Herstellung der isoharnstoffgruppenhaltigen Urethanharze erfolgt durch Addition von Alkoholen an Carbodiimidgruppen enthaltende Urethane, wie sie z.B. in Saunders, Frisch: Polyurethanes; Chemistry and Technology, Part I, S. 117 beschrieben ist.

Die Addition, die gemäss dem Formelschema:

$$R^1{-}N{=}C{=}N{-}R^2 + HOR^3 \rightarrow R^1{-}\overset{H}{N}{-}\underset{OR^3}{C}{=}N{-}R_2$$

wobei $R^1$, $R^2$ und $R^3$ gegebenenfalls substituierte Kohlenwasserstoffreste wie beispielsweise Alkyl, Cycloalkyl und Aryl sind, verläuft, kann sowohl thermisch wie auch in Gegenwart von basischen Katalysatoren durchgeführt werden.

Besonders geeignet sind isoharnstoffhaltige Urethanharze, die durch Umsetzung von Di- und/oder Polyisocyanaten mit einem stöchiometrischen Unterschuss an einem Gemisch aus ein- und mehrwertigen Alkoholen, anschliessender Carbodiimidisierung der restlichen Isocyanatgruppen in Gegenwart der üblichen Carbodiimidisierungskatalysatoren und Umsetzung der Carbodiimidgruppen mit Monoalkoholen entstanden sind.

Als einwertige Alkohole kommen z.B. Methanol, Ethanol, Propanol, Butanol, Pentanol, Oktanol und ihre Isomere, ferner Fettalkohole, cycloaliphatische Alkohole wie Cyclohexanol, Ethylenglykolmonoether, Di- und Polyethylenglykolmonoether in Frage.

Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandiethanol (1,4-Bishydroxymethylcyclohexan), 2-Methyl-1,3-propandiol, Glycerin, Trimethylolpropan, Hexantriol-(1,2,6), Butantriol-(1,2,4) Trimethylolethan, Pentaerythrit, Chinit, ferner Diethylenglykol, Triethylenglykol, Tetraethylenglykol, Polyethylenglykole, Dipropylenglykol, Polypropylenglykole, Dibutylenglykol und Polybutylenglykole in Frage.

Monoalkohole, die nach Umsetzung mit carbodiimidtigen Urethanen im Sinne der Erfindung besonders wirkungsvolle isoharnstoffhaltige Urethanharze ergeben, sind z.B. Fettalkohole, sekundäre Alkohole wie Isopropylalkohol, 2-Butanol, Isoamylalkohol, ferner aliphatische Alkohole, die in 2-Stellung eine Alkylgruppe haben wie 2-Ethylhexanol, Isobutylalkohol.

Vorzugsweise Verwendung finden Pigmentpräparationen, die ein isoharnstoffgruppenhaltiges Urethanharz auf Basis Toluylendiisocyanat enthalten.

Die Herstellung der erfindungsgemässen Präparationen durch Einarbeitung der Pigmente in die isoharnstoffgruppenhaltigen Urethanharze kann sowohl verdünnungsmittelfrei über Schmelzen wie auch in Anwesenheit von organischen Verdünnungsmitteln erfolgen.

Verdünnungsmittelhaltige Pigment-Dispersionen können in üblichen Nasszerkleinerungsaggregaten hergestellt werden, wie Kneter, Attritoren, Walzenstühlen, Dissolver, Rotor-Stator-Mühlen, Kugelmühlen und mit besonderem Vorteil in schnellaufenden Rührwerksmühlen mit Umfanggeschwindigkeiten von 5–60 m/Sek., bevorzugt 10–20 m/Sek., die Mahlkörper in der Grösse von etwa 0,1–10 mm Durchmesser, bevorzugt 0,5–1,2 mm, aus Stahl, Glas, Keramik, Sand oder Kunststoff enthalten. Geeignete Rührwerksmühlen sind beispielsweise in Farbe und Lack 71, Seiten 275 ff. und Seiten 464 ff., Farbe und Lack 75, Seiten 953 ff., sowie in der DE-A-1 230 657 beschrieben.

Geeignete organische Verdünnungsmittel sind Lösungsmittel aus der Reihe der Ester, insbesondere der Glykoletherester, Ether, Ketone, aromatischen und chlorierten Kohlenwasserstoffe wie sie für den Einsatz in Zweikomponenten-Polyurethanen gebräuchlich sind. Weiterhin geeignet sind hochsiedende Lösungsmittel, die der Klasse der Weichmacher zuzuordnen sind, wie sie in der Lack- und Kunststoffindustrie gebräuchlich sind, wie beispielsweise Alkyl- und/oder Arylester zwei- oder mehrbasischer Säuren wie Adipinsäure, Phthalsäure, Terephthalsäure oder aliphatischer Monocarbonsäuren mit Alkoholen, wie Glycerintriacetat. Eine spezielle Möglichkeit besteht bei der Verwendung der beanspruchten Farbpasten in Polyurethansystemen mit reaktionsfähigen NCO-Gruppen auch darin, hydroxylgruppenhaltige Produkte zum Lösen oder Verdünnen einzusetzen, deren OH-Gruppen mit Isocyanat reagieren und nach der Urethanbildung im angefärbten, ausreagierten System vollkommen eingebaut sind. Zu nennen sind z.B. Glycerindiacetat, Monoether des Di- oder Triethylenglykols, kurzkettige Ethylenoxidderivate des Phenols oder dessen Substitutionsprodukten. Weiterhin ist es besonders bei niedermolekularen isoharnstoffhaltigen Urethanharzen möglich, eine Auflösung z.B. in einem linearen oder verzweigten Polyether aus einem Diol und/oder Triol mit angelagerten Propylenoxid und/oder Ethylenoxid mit mittleren Molgewichten bis 5000 zu erreichen.

Auch ist eine Auflösung in linearen oder verzweigten Polyestern aus einem Diol und/oder Polyol verestert mit aliphatischen oder aromatischen Dicarbonsäuren und/oder Polycarbonsäuren mit mittleren Molgewichten bis 5000 möglich.

Die erfindungsgemässen Präparationen finden Verwendung bei der Pigmentierung von organischen, insbesondere synthetischen makromolekularen Materialien wie beispielsweise Polyester, Polyether, Polycarbonate, Polyolefine vorzugsweise aber zum Pigmentieren von Polyurethanen.

Die erfindungsgemässen Pigmentpräparationen mit isoharnstoffgruppenhaltigen Urethanharzen haben im Vergleich zu Pigmentpräparationen mit carbodiimidgruppenhaltigen Urethanen (DE-A-2 402 839) eine niedrigere Viskosität.

Beispiel 1

Zu 174 g eines Isomerengemisches von 80 Teilen 2,4-Toluylendiisocyanat und 20 Teilen 2,6-Toluylendiisocyanat wird bei 50–80 °C innerhalb von 30 Minuten ein Gemisch von 9 g Ethylenglykol und 8 g Methanol zugetropft. Anschliessend werden 0,5 g Phospholinoxid zugegeben und bei 80 °C 12 l $CO_2$ abgespalten. Man versetzt das viskose Produkt mit 180 g eines Gemisches aus $C_{12}$–$C_{18}$-Fettalkoholen und rührt eine Stunde bei 100 °C. Anschliessend werden 0,3 g Zinn-di-(2-ethylcapronat) zugegeben und 2 Stunden bei 150 °C nachgerührt.

Viskosität einer 40%igen Lösung in Dibutylphthalat bei 25 °C: 0,0023 Pa·s.

Beispiel 2

Zu 174 g eines Isomerengemisches von 80 Teilen 2,4-Toluylendiisocyanat und 20 Teilen 2,6-Toluylendiisocyanat wird bei 50 bis 80 °C ein Gemisch von 9 Ethylenglykol und 8 g Methanol zugetropft. Anschliessend werden 0,5 g Phospholinoxid zugegeben und bei 80 °C 12 l $CO_2$ abgespalten. Man gibt anschliessend 60 g 2-Methyl-1-propanol zu und rührt eine Stunde bei 125 °C und 2 Stunden bei 150–175 °C.

Viskosität einer 40%igen Lösung in Dibutylphthalat bei 25 °C: 0,028 Pa·s.

Beispiel 3

Zu 3,48 kg eines Isomerengemisches von 80 Teilen 2,4-Toluylendiisocyanat und 20 Teilen 2,6-Toluylendiisocyanat wird bei 50–80°C eine Mischung von 180 g Ethylenglykol und 160 g Methanol innerhalb von 30 Minuten zugetropft. Das Produkt wird auf 80 °C erwärmt und 7 g Phospholinoxid zugegeben. Bei 80–90 °C werden 240 l $CO_2$ abgespalten. Anschliessend werden 1,8 kg 2-Ethylhexanol zugegeben und 30 Minuten Nachgerührt.

Bei 125 °C werden 3 g Zinn-di-(2-ethylcapronat) zugegeben (heftige $CO_2$-Entwicklung). Man rührt die Lösung eine Stunde bei 125 °C und 2 Stunden bei 150 °C. Anschliessend werden 100 g 2-Ethylhexanol zugegeben und 15 Minuten nachgerührt. Dem Reaktionsprodukt werden 50 kg Dibutylphthalat zugegeben. Man erhält 10 kg einer 50%igen Lösung in Dibutylphthalat. Viskosität einer 40%igen Lösung in Dibutylphthalat bei 25 °C: 0,02 Pa·S.

Das isoharnstoffhaltige Festharz schmilzt ab 75 °C. Im IR-Spektrum sind keine Isocyanat- oder Carbodiimidbanden zu beobachten. Den Urethan- und Isoharnstoffgruppen sind Absorptionen bei 1705 $cm^{-1}$ bzw. 1654 $cm^{-1}$ zuzuordnen.

Beispiel 4

174 g eines Gemischs aus 2,4- und 2,6-Toluylendiisocyanat im Verhältnis 80:20, gelöst in 500 ml Toluol, werden unter Stickstoff mit 16 g Methanol versetzt. Nachdem das Gemisch 2 Stunden bei einer Temperatur von max. 50 °C nachgerührt wurde, werden 0,8 g eines Gemisches aus 1-Methyl-1-phospha-2-cyclopenten-1-oxid und 1-Methyl-1-phospha-3-cyclopenten-1-oxid im Verhältnis von ca. 1:1 zugegeben.

Das Reaktionsgemisch wird langsam auf 90 °C aufgeheizt und anschliessend, wenn sich alle Isocyanatgruppen umgesetzt haben, was IR-spektroskopisch leicht zu überprüfen ist, am Rotationsverdampfer vom Toluol befreit. Es bleibt ein harzartiger Rückstand mit einem Carbodiimidäquivalent von 224 zurück.

40 g des Harzes werden mit 55 g eines Gemisches aus $C_{12}$-$C_{18}$-Fettalkoholen und 0,1 g Zinn-di-(2-ethylcapronat) versetzt und 2 Stunden bei 150 °C gerührt. Man erhält 95 g eines isoharnstoffhaltigen Urethanharzes.

Viskosität einer 40%igen Lösung in Dibutylphthalat bei 25 °C: 0,0034 Pa·s.

Beispiel 5

In 80 g einer 2%igen Lösung eines Harzes nach Beispiel 2 in einem Polyester, der ein Umsetzungsprodukt aus Phthalsäure, Triethylenglykol und Isononylalkohol ist, werden 20 g eines Furnacerusses auf einer Trichtermühle dispergiert. Man erhält eine sehr gut fliessfähige Pigmentpaste, mit der in Polyesterurethan-Schaumstoffen eine hohe Farbtiefe erreicht wird, indem man in eine Mischung aus 200 g eines schwachverzweigten Polyesters aus Adipinsäure, Diethylenglykol und Trimethylolpropan mit der OH-Zahl 50 und 73,2 g Toluylendiisocyanat 10 g der schwarzen Pigmentpaste einrührt und das Gemisch durch den üblichen Zusatz von Wasser und Hilfsmitteln zur Schaumbildung bringt.

Beispiel 6

In einer 1%igen Lösung eines Harzes nach Beispiel 3 in einem verzweigten Polyether mit einem mittleren Molgewicht von 4800, der durch Umsetzung von 1 Teil Trimethylolpropan mit einer Mischung aus 87 Teilen Propylenoxid und 13 Teilen Ethylenoxid erhalten wird, lassen sich auf einer Rührwerksmühle 15% eines Gasrusses mit einer BET-Oberfläche von 110 $m^2/g$ (pH-Wert der wässrigen Aufschlämmung 5) zu einer fliessfähigen Russpaste dispergieren. Diese Paste ist sehr gut für die Formverschäumung geeignet bei der als Polyisocyanatkomponente Diphenylmethandiisocyanat-(4, 4') verwendet wird.

Beispiel 7

In 82 g einer 3%igen Lösung des isoharnstoffgruppenhaltigen Urethanharzes aus Beispiel 3 in einem Polyester mit der OH-Zahl 65, der ein Umsetzungsprodukt aus Adipinsäure und 1,2-Propandiol ist, werden 28 g eines anoxidierten Farbrusses mit einer BET-Oberfläche von 180 $m^2/g$ auf einem Schüttelgerät mit Hilfe von Glaskugeln von 3 mm Durchmesser innerhalb von 30 Minuten dispergiert. Man erhält eine sehr gut fliessfähige Russpaste, die sich durch hohe Flockungsbeständigkeit auszeichnet. Sie ist besonders für die Anfärbung von Polyurethanschäumen auf Esterbasis geeignet.

Beispiel 8

In 30 g einer 0,5%igen Lösung des Harzes nach Beispiel 1 in Tris-(2-ethylhexyl)-phosphat werden 70 g Cadmiumselenid auf einer Korundscheibenmühle dispergiert. Man erhält eine sehr gut fliessfähige Pigmentpaste zur Massefärbung von Polyolefinen.

Beispiel 9

100 g eines Polyolgemisches der OH-Zahl 495 und einer Viskosität von 1,15 Pa·s bei 25 °C, bestehend aus 80 g eines Polyethers der OH-Zahl 550, der durch Anlagerung von Ethylenoxid an

Trimethylolpropan erhalten wurde, und 20 g eines Polyesters der OH-Zahl 370, der durch Umsetzung von 1 Mol Adipinsäure, 2,6 Mol Phthalsäureanhydrid, 1,3 Mol Ölsäure und 6,9 Mol Trimethylolpropan erhalten wurde, werden mit 1 g eines Polysiloxan-Polalkylenoxid-Blockcopolymerisats als Schaumstabilisator, 0,5 g Tetramethylguanidin als Katalysator, 5 g Monofluortrichlormethan als Treibmittel und 5 g einer in Beispiel 6 beschriebenen Pigmentpräparation vermischt. Das Gemisch wird einem Zweikomponenten-Dosiermischgerät zugeführt und dort zur Herstellung des aufschäumenden Reaktionsgemisches mit 155 g eines Polyisocyanates, das durch Phosgenierung von Anilin-Formaldehyd-Kondensaten und anschliessende Umsetzung mit einem Diol der OH-Zahl 480 erhalten wurde, eine Viskosität von 0,13 Pa·s bei 25 °C und einen NCO-Gehalt von 28 Gew.-% aufweist, intensiv vermischt und sofort in ein auf 60 °C temperiertes Metallwerkzeug eingetragen. Nach 7 Minuten Entformungszeit kann das eingefärbte Formteil aus hartem Polyurethan-Integralschaumstoff mit einer Rohdichte von 6,0 g/cm$^3$ entformt werden. Verglichen mit einem nicht eingefärbten, rohen Formteil sind die mechanischen Eigenschaften (ε-Modul, Biegefestigkeit, Bruchdehnung, Schlagzähigkeit, Formbeständigkeit in der Wärme usw.) des eingefärbten Formteils nicht erniedrigt.

Beispiel 10

75 Teile eines Polyethers, mit einem mittleren Molekulargewicht von 4800, der durch Umsetzung von 1 Teil Trimethylolpropan mit einer Mischung aus 87 Teilen Propylenoxid und 13 Teilen Ethylenoxid erhalten wird, und 25 Teilen eines Gasrusses mit 6% flüchtigen Bestandteilen werden homogenisiert und in einer Korundscheibenmühle gemahlen. Es entsteht eine sehr schlecht fliessende Russdispersion.

Zu 100 g dieser Russdispersion werden jeweils 4 g einer 25%igen Lösung der isoharnstoffgruppenhaltigen Urethanharze (Beispiele 1–4) in dem oben beschriebenen Polyether zugegeben. Man erhält sehr gut fliessfähige Pigmentpasten, deren Viskositäten gemessen im Haake Rotationsviskosimeter bei 25 °C folgende Werte haben:

Beispiel 1: 0,1 Pa·s
Beispiel 2: 0,08 Pa·s
Beispiel 3: 0,075 Pa·s
Beispiel 4: 0,115 Pa·s

Beispiel 11

55 Teile eines nach Beispiel 3 hergestellten Urethanharzes werden in einem heizbaren Dispersionskneter aufgeschmolzen. Anschliessend werden 45 Teile Pigment-Gelb 83 eingetragen und die Mischung zwei Stunden bei 100–120 °C geknetet. Nach dem Abkühlen wird die Formierung zu einem Pulver gemahlen. Man erhält ein Pulverpigment, das ohne Anwendung hoher Dispergierkräfte zu farbstarken Ausfärbungen führt.

**Patentansprüche**

1. Pigmentpräparation enthaltend ein isoharnstoffgruppenhaltiges Urethanharz.

2. Pigmentpräparation enthaltend 3–80 Gew.-% Pigment, 0,5–50 Gew.-% isoharnstoffgruppenhaltiges Urethanharz und 0–90 Gew.-% organisches Verdünnungsmittel.

3. Pigmentpräparation enthaltend 10–70 Gew.-% Pigment, 0,5–30 Gew.-% isoharnstoffgruppenhaltiges Urethanharz und 10–90 Gew.-% organisches Verdünnungsmittel.

4. Pigmentpräparation enthaltend 15–80 Gew.-% anorganisches Pigment, 0,5–30 Gew.-% isoharnstoffgruppenhaltiges Urethanharz und 10–90 Gew.-% organisches Verdünnungsmittel.

5. Pigmentpräparation gemäss Anspruch 3, enthaltend 10–50 Gew.-% organisches Pigment oder Russ.

6. Pigmentpräparation gemäss den Ansprüchen 3–5, enthaltend 1–20 Gew.-% isoharnstoffgruppenhaltiges Urethanharz.

7. Pigmentpräparation gemäss den Ansprüchen 1–6, enthaltend ein isoharnstoffgruppenhaltiges Urethanharz, dessen 40%ige Lösung in Dibutylphthalat eine Viskosität von 0,0005–5 Pa·s aufweist und das einen Isoharnstoffgruppengehalt von 0,1–20 Gew.-% hat.

8. Pigmentpräparation gemäss den Ansprüchen 1–6, enthaltend ein isoharnstoffgruppenhaltiges Urethanharz auf Basis Toluylendiisocyanat.

9. Verfahren zur Verbesserung des Pigmentbindevermögens von üblichen, in Pigmentpräparationen eingesetzten Polyestern, Polyethern und Polyurethanen, dadurch gekennzeichnet, dass man den Präparationen ein isoharnstoffgruppenhaltiges Urethanharz zusetzt.

10. Verfahren zum Pigmentieren von organischen makromolekularen Materialien, insbesondere Polyurethanen, dadurch gekennzeichnet, dass man eine Pigmentpräparation gemäss den Ansprüchen 1–8 verwendet.

**Revendications**

1. Préparation de pigment contenant une résine d'uréthanne contenant des groupes isourée.

2. Préparation de pigment contenant 3–80% en poids de pigment, 0,5–50% en poids de résine d'uréthanne à groupes isourée et 0–90% en poids de diluant organique.

3. Préparation de pigment contenant 10–70% en poids de pigment, 0,5–30% en poids de résine d'uréthanne à groupes isourée et 10–90% en poids de diluant organique.

4. Préparation de pigment contenant 15–80% en poids de pigment inorganique, 0,5–30% en poids de résine d'uréthanne à groupes isourée et 10–90% en poids de diluant organique.

5. Préparation de pigment selon la revendication 3, contenant 10–50% en poids de pigment organique ou de noir de carbone.

6. Préparation de pigment selon les revendications 3–5, contenant 1–20% en poids de résine d'uréthanne à groupes isourée.

7. Préparation de pigment selon les revendications 1–6, contenant une résine d'uréthanne à

groupes isourée, dont la solution à 40% dans le phtalate de dibutyle présente une viscosité de 0,0005–5 Pa·s et qui a une teneur en groupes isourée de 0,1–20% en poids.

8. Préparation de pigment selon les revendications 1–6, contenant une résine d'uréthanne à groupes isourée à base de toluylènediisocyanate.

9. Procédé pour l'amélioration du pouvoir liant pour le pigment des polyesters, polyéthers et polyuréthannes habituels utilisés dans les préparations de pigment, caractérisé en ce qu'on ajoute aux préparations une résine d'uréthanne à groupes isourée.

10. Procédé pour la pigmentation de matières organiques macromoléculaires, en particulier de polyuréthannes, caractérisé en ce qu'on utilise une préparation de pigment selon les revendications 1–8.

**Claims**

1. Pigment preparation containing a urethane resin containing isourea groups.

2. Pigment preparation containing 3–80% by weight of pigment, 0.5–50% by weight of urethane resin containing isourea groups and 0–90% by weight of organic diluent.

3. Pigment preparation containing 10–70% by weight of pigment, 0.5–30% by weight of urethane resin containing isourea groups and 10–90% by weight of organic diluent.

4. Pigment preparation containing 15–80% by weight or inorganic pigment, 0.5–30% by weight of urethane resin containing isourea groups and 10–90% by weight of organic diluent.

5. Pigment preparation according to Claim 3, containing 10–50% by weight of organic pigment or carbon black.

6. Pigment preparation according to Claims 3–5, containing 1–20% by weight of urethane resin containing isourea groups.

7. Pigment preparation according to Claims 1–6, containing a urethane resin containing isourea groups, which has a viscosity of 0.0005–5 Pa·s in 40% strength solution in dibutyl phthalate and has a content of isourea groups of 0.1–20% by weight.

8. Pigment preparation according to Claims 1–6, containing a urethane resin, containing isourea groups, based on toluylene diisocyanate.

9. Process for improving the pigment-binding capacity of customary polyesters, polyethers and polyurethanes employed in pigment preparations, characterised in that a urethane resin containing isourea groups is added to the preparations.

10. Process for pigmenting organic macromolecular materials, in particular polyurethanes, characterised in that a pigment preparation according to Claims 1–8 is used.